(19)

Europäisches
Patentamt
European
Patent Office
Office européen
des brevets

(11) **EP 2 382 400 B1**

(12) **EUROPEAN PATENT SPECIFICATION**

(45) Date of publication and mention
of the grant of the patent:
**13.08.2014 Bulletin 2014/33**

(51) Int Cl.:
***F16G 5/16*** *(2006.01)*

(21) Application number: **09796481.1**

(22) Date of filing: **22.12.2009**

(86) International application number:
**PCT/NL2009/000269**

(87) International publication number:
**WO 2010/074561 (01.07.2010 Gazette 2010/26)**

(54) **DRIVE BELT FOR A CONTINUOUSLY VARIABLE TRANSMISSION, TRANSMISSION PROVIDED WITH SUCH A DRIVE BELT AND METHOD FOR USE THEREOF**

ANTRIEBSRIEMEN FÜR EIN STUFENLOSES GETRIEBE, MIT SOLCH EINEM ANTRIEBSRIEMEN VERSEHENES GETRIEBE UND VERFAHREN DAFÜR

COURROIE DE TRANSMISSION POUR TRANSMISSION VARIABLE EN CONTINU, TRANSMISSION ÉQUIPÉE D'UNE TELLE COURROIE DE TRANSMISSION ET SON PROCÉDÉ D'UTILISATION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.12.2008 NL 2002372**

(43) Date of publication of application:
**02.11.2011 Bulletin 2011/44**

(73) Proprietor: **Robert Bosch GmbH**
**70442 Stuttgart (DE)**

(72) Inventors:
• **BRANDSMA, Arjen**
**5045 WN Tilburg (NL)**
• **TRAN, Minh-Duc**
**5348 KX Oss (NL)**
• **SCHRAUWERS, Geert-Jan**
**2480 Dessel (BE)**

• **VERHOEVEN, Peter**
**5345 DJ Oss (NL)**
• **VAN DER VELDE, Arie Gerrit Isaak**
**5014 LW Tilburg (NL)**

(74) Representative: **Plevier, Gabriel Anton Johan Maria**
**Bosch Transmission Technology B.V.**
**PO Box 500**
**5000 AM Tilburg (NL)**

(56) References cited:
**EP-A- 1 605 187      JP-A- 10 227 338**
**US-A- 4 342 561      US-A- 6 102 823**

• **W. BEITZ K.-H KÜTTNER: "Taschenbuch für den Maschinenbau" 1981, SPRINGER VERLAG , BERLIN HEIDELBERG NEW YORK , XP002539453 page 129; table 4**

**Description**

The present invention firstly relates to the drive belt according to the preamble of Claim 1 below. Such a drive belt is generally used for transmitting a driving power between two axles in a motorized drive, with the drive belt being fitted around at least two rotatable pulleys and being tensioned in between. A generally known application of such a transmission is the continuously variable transmission for 2-wheeled motor vehicles, such as scooters, the pulleys of which are able to vary a running radius of the drive belt at said respective pulleys in mutually opposite directions. This drive belt and transmission are generally known as such and have already been described in the US patent with publication number 4,612,005 in 1986.

The known drive belt comprises a more or less continuous series of individual transverse elements and an endless, that is to say continuous, pulling element which usually consists of a single, strip-shaped, or flat and thin ring. The pulling element is enclosed in the radial or height direction and in the axial or transverse direction in a central opening of the transverse elements. It is also known from US-4,612,005 that the pulling element can be composed of two or more rings which are then stacked concentrically with respect to one another. In addition, it is possible for the drive belt to be provided with two single or multiple pulling elements, to which end the transverse elements are provided with a hole on either side thereof for accommodating one of the pulling elements instead of with said central opening. This latter embodiment of the known drive belt is the subject-matter of, for example, British patent GB-A-2,088,018.

With the known drive belts, the transverse elements are movable along the peripheral direction of the pulling element thereof, as a result of which a driving power is substantially transmitted between the pulleys via pressure forces exerted between the transverse elements, with the pulling element guiding the transverse elements in the desired path. This type of drive belt is also known as a push belt.

However, it is known that it is possible to fix the transverse elements and the pulling element in the peripheral direction thereof with respect to one another, in which case said driving power is transmitted via the pulling element, the transverse elements providing the transmission of force between the pulling element and pulleys. The last-mentioned type of drive belt is also known as a pull belt and British patent GB-A-196,465 forms an early example thereof. A more recent example of the pull belt is given by European patent publication number EP-A-1,304,501.

Furthermore, the United States patent publication US-A-6,102,823 discloses a similar type of belt, wherein the transverse elements are rigidly fixed to the pulling element. In this latter publication the pulling element is denoted the center belt that includes a core element of rectangular cross section with elastomeric layers on its upper (i.e. outside) and lower (i.e. inside) surfaces. This center belt and the transverse elements that are denoted blocks are connected together by fasteners penetrating the core elements and the blocks or by providing the belt with both upper and lower blocks that are held together by fasteners in pairs to captively embrace the center belt without penetration of the core element.

Significant advantages of the push belt with respect to the pull belt are the relatively simple assembly of the push belt and the reduced (fatigue) load of the pulling element thereof during operation, as a result of which the push belt is suitable in principle for transmitting a greater driving power than the pull belt. More particularly, in the push belt the variations in tensile force which occur in the pulling element during operation (or the tension amplitude) are much smaller than in the pull belt. However, compared to the push belt, the pull belt has the advantages that it, and in particular the transverse element component thereof, can be produced less accurately and therefore at a lower cost and that a higher energy efficiency of the transmission can thus be achieved thereby in principle. More particularly, there is no sliding contact in the pull belt between the transverse elements themselves and between the transverse elements and the pulling element, so that no associated loss of power occurs either.

It is an object of the present invention to provide a new type of drive belt, at least to provide a new transmission provided with a drive belt in which one or more advantages of the known pull belt and of the known push belt are combined.

The invention relates to the application of the measure according to the characteristic feature of the attached Claim 1 in the known drive belt, in particular the known push belt. As a result of the relatively great friction between the transverse elements and the pulling element thereof, the drive belt according to Claim 1 can behave like a pull belt during operation of the transmission. The drive belt according to the invention thus combines the advantage of the simple assembly of the known push belt with the advantage of the relatively limited loss of power through internal friction of the known pull belt.

In particular with a relatively high speed of revolution or rotation, the drive belt according to the invention will advantageously behave like a pull belt, since, in that case, the normal force in the frictional contact between the transverse elements and the pulling element at the location of a pulley comprises a component which is determined by the centrifugal effect of the transverse elements. It is precisely at such a high speed of rotation of the drive belt that the efficiency of the drive mechanism as a whole is mainly determined in practice (i.e. during relatively long operation at a constant, relatively high or cruising speed of the motor vehicle).

By contrast, the drive belt according to the invention can also advantageously still behave as a push belt at a relatively low speed of rotation thereof. It is precisely at such a low speed of rotation of the drive belt that the drive mechanism is subjected to the greatest load in practice (i.e. during relatively short operation during acceleration of the motor vehicle).

The invention is particularly suitable for application in 2-wheeled motor vehicles, such as scooters, where the transmission, compared to the known application of the push belt in 4-wheeled motor vehicles or passenger cars, has to be able to transmit a relatively low torque at a relatively high rotary speed. More particularly, such a preferred application is characterized by the fact that it uses no, that is no active, oil lubrication and/or oil cooling of said frictional contact and/or by the fact that the power of the motor used therein is less than 50 kW.

According to the invention, it is advantageously possible, either in addition or as an alternative to the measure according to Claim 1, only to profile the radially outer side of the pulling element, at least in such a manner that profiled parts thereof in the peripheral direction engage with (a part of) the transverse element. Thus, it is ensured that the drive belt according to the invention will also operate as a pull belt at an extremely low speed of rotation, which will be preferred under certain circumstances and/or with certain applications thereof, such as an oil-lubricated transmission, a 4-wheeled passenger car and/or at a relatively high level of torque. According to the invention, a clearance may be provided between the profiling of the pulling element and the individual transverse elements of the drive belt, thus advantageously making assembly of the drive belt simple and/or easy.

Said profiling of the pulling element can be achieved by providing a profiled plastic or rubber cover layer to a metal pulling strip which may or may not be provided with a coating, which pulling strip and cover layer together then form the pulling element of the drive belt, all this while the radially inner side of the pulling element can remain substantially flat and/or smooth for the purpose of an optimum contact with the transverse elements.

Compared to the known cover layer which is applied to a pulling strip on both sides, the single-sided variant thereof according to the present invention has a large number of advantages, including simpler manufacturing (in particular simple positioning of the pulling strip with respect to the cover layer), small losses during operation (in particular fewer losses as a result of cyclic deformation/bending of the rubber cover layer during operation) and a higher load-bearing capacity of the cover layer.

Said coating may, for example, be desired in order to prevent corrosion of the pulling element, for example at the location of said radially inner side thereof. In addition, a coating of the pulling element and/or the transverse elements may be used in order to influence, in particular to increase, the coefficient of friction in said frictional contact between this radially inner side of the pulling element, and/or of the pulling strip, and the transverse elements. In this respect, particularly rubber has been found to be a highly suitable coating material.

According to the invention, it is also possible during operation of the transmission, either in addition or as an alternative to the abovementioned measures, to choose a force with which the drive belt is clamped by, and between, the sheaves of a pulley to be relatively high, at least compared to the minimum force which is required in order to achieve a sufficient degree of friction between the sheaves and the drive belt, at least for the purpose of transmitting a torque which is supplied to the transmission between the pulleys.

The invention is now explained in more detail with reference to the exemplary embodiments illustrated in the attached figures, in which:

Fig. 1 shows a diagrammatic view of a known transmission provided with two pulleys and a drive belt;
Fig. 2 shows a diagrammatic cross-sectional view of a (part of the) known transmission at the location of a pulley thereof, including a representation of the play of forces, such as occurs during operation of the transmission in situ; and
Fig. 3 diagrammatically shows a (part of a) drive belt according to the invention in cross section.

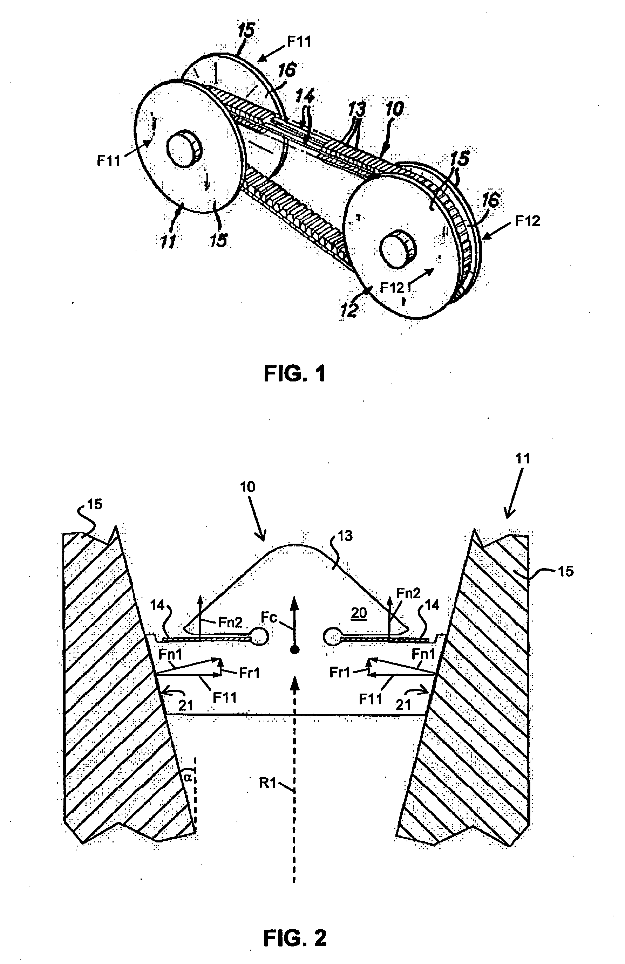

Fig. 1 illustrates the known continuously variable transmission with two pulleys 11 and 12 and a drive belt 10 in highly diagrammatical fashion. The known drive belt 10 comprises an at least virtually continuous series of individual transverse elements 13 and, at least in the present exemplary embodiment, two substantially strip-shaped and continuous pulling elements 14. In the transmission, the drive belt 10 is fitted around both pulleys 11, 12 in an arched way and is in this case situated between the more or less conically shaped sheaves 15 thereof which are axially displaceable with respect to one another, i.e. relative to one another. During operation of the transmission, the drive belt 10 is clamped between the sheaves of the two pulleys 11, 12 by respective, axially directed clamping forces F11, F12. The prevailing level of clamping forces F11, F12 determines the torque which can be transmitted by means of the drive belt 10 between the pulleys 11, 12 and the ratio between these clamping forces F11, F12 determines the respective running radii of the drive belt 10 at the pulleys 11, 12. The ratio between the running radii determines the transmission ratio of the transmission.

In Fig. 2, the drive belt 10 is shown in more detail and in cross section at the location of a pulley 11. The transverse elements 13 of the drive belt 10 are provided with two principal planes 20 which are oriented in mutually opposite peripheral directions of the drive belt 10 (and of which only the front plane 20 is visible in Fig. 2) and with two side faces 21 which are positioned at an acute angle to one another and which extend on either side of the transverse element 13 between the principal planes 20 thereof and which are intended for frictional contact with the transmission pulleys 11, 12 and/or the sheaves 15 thereof. Usually, the pulling element 14 is made of a material which has a high tensile strength, such as steel or fibre material, and the transverse elements 13 are made of a plastic which may or may not be reinforced with fibres. In addition, the transverse elements 13 will in practice also usually be provided with a lug (not shown here) and with a complementary notch (likewise not shown here) in such a manner that in the drive belt the lug of a first transverse element 13 is at least partially accommodated in the notch of a second, i.e. adjacent, transverse element 13.

During operation of the transmission, the sheaves 15 of the pulley 11 exert said axially directed clamping force F11 on the transverse element 13. Due to the oblique orientation of the side faces 21, this clamping force F11 results in (or, in a balanced situation, in normal operation is balanced with) a normal force Fn1 in the (friction) contact between the transverse element 13 and a sheave 15 and in a radially oriented force Fr1. Said forces F11, Fn1, Fr1 act on both sides of the transverse element 11, i.e. at the location of the two pulley sheaves 15 separately. In addition, the rotation of the transverse element 13 between the pulley sheaves 15 produces a radially outwardly oriented, apparent and in this case centrifugal force Fc.

Said radial forces, i.e. Fr1 and Fc twice, result in a normal force Fn2 per pulling element 14 in the (friction) contact thereof with the transverse element 13, which is, in the balanced situation, compensated for by an equally large, but radially inwardly directed reaction force for each pulling element 14 (not shown).

In the present drive belt design, the transverse elements 14 are thus arranged movably along the periphery of the pulling elements 14. In this case, the clamping force F11 exerted is adapted to said torque T and can be calculated thus:

$$Fw1 = \frac{\frac{1}{2}T}{R1},$$

$$\frac{Fw1}{\mu} = Fn1 = \frac{F11}{\cos(\alpha)},$$

$$F11 = \frac{T \cdot \cos(\alpha)}{2 \cdot \mu1 \cdot R1} * Sf \qquad\qquad (1),$$

where Fw1 is the tangential frictional force required for each separate pulley sheave 15 in order to transmit the supplied torque T, where $\mu1$ is the coefficient of friction acting between the sheaves 15 and the transverse elements 13, where R1 is the running radius of the drive belt 10 between these sheaves 15 (as determined by the effective point of engagement of the clamping force F11), where $\alpha$ is the angle between the exact radial direction and (a contact surface of) the sheaves 15 and where Sf is a calculation factor greater than 1, the so-called safety factor.

Due to the normal force Fn2 in the frictional contact between the transverse element 13 and a pulling element 14, a frictional force Fw2 will also be present between these, as a result of which the pulling element 14 is loaded in such a manner that part of said torque T is transmitted between the pulleys 11, 12. The following applies to the last-mentioned frictional force Fw2 (at least when ignoring - a radial component of - the pressure forces exerted between the adjacent transverse elements 13 in the drive belt 10, i.e. at least if the drive belt 10 acts as a pull belt):

$$Fw2 = \mu2 \cdot Fn2 = \mu2 \cdot (Fr1 + \tfrac{1}{2}Fc),$$

$$Fr1 = F11 \cdot \tan(\alpha),$$

$$Fc \approx \frac{m13 \cdot v^2}{R1},$$

$$Fw2 \approx \mu2 \cdot (F11 \cdot \tan(\alpha) + \frac{m13 \cdot v^2}{2 \cdot R1}) \qquad (2),$$

where $\mu2$ is the coefficient of friction acting between the transverse elements 13 and the pulling elements 14, where m13 is the mass of the transverse element 13 and where v is the (longitudinal) speed (or speed of revolution) of the drive belt 10.

With the known transmission, it generally holds true that Fw2<<Fw1 and a driving torque T is thus essentially transmitted by the transverse elements 13 advancing each other between the pulleys 11, 12. The known drive belt 10 thus acts as a push belt.

However, according to the present invention, it may be advantageous to operate the drive belt 10 as a pull belt or allow it to function as such, at least at a relatively high speed of revolution thereof during operation of the transmission. According to the present invention, the transmission to this end has to satisfy the following equation, at least during operation:

$$Fw2 > Fw1,$$

$$\left( \frac{\mu2 \cdot T \cdot \sin(\alpha)}{2 \cdot \mu1 \cdot R1} \right) * Sf + \frac{\mu2 \cdot m13 \cdot v^2}{2 \cdot R1} > \frac{T}{2 \cdot R1},$$

$$\mu2 \cdot m13 \cdot v^2 > T * (1 - \frac{\mu2}{\mu1} \cdot \sin(\alpha) \cdot Sf) \qquad (3).$$

It follows from equation (3) that one or more of the following measures can be taken compared to the known drive belt 10:

a) increasing the coefficient of friction $\mu2$ between the transverse elements 13 and the pulling elements 14, for example by using suitable combinations of materials, possibly in the form of a coating and/or by applying a suitable profiling to the respective contact surfaces,
b) increasing the mass m13 of the transverse elements 13, for example by producing these from two materials of different densities, with the lighter material forming at least the side faces 21 and the heavier material forming at least the core of the transverse element 13.
To this end, one or more of the following measures can be taken in the transmission:
c) increasing the contact or sheave angle a of the pulleys 11, 12
d) increasing the speed of revolution v of the drive belt, for example by using an accelerating gear stage between the drive mechanism/motor and the transmission,
e) reducing the coefficient of friction $\mu1$ between the transverse elements 13 and the pulley sheaves 15, for example by using suitable combinations of materials, possibly in the form of a coating and/or by applying a suitable profiling to the respective contact surfaces, and
f) increasing the safety factor Sf.

The last measure f) has the advantage that it can usually be readily applied, i.e. without the construction of the drive belt 10 or the transmission having to be modified.

According to the present invention, it may be advantageous to operate the drive belt 10 as a pull belt at a relatively low speed of revolution thereof as well, or allow it to function as such. According to the present invention, the transmission, at least during operation thereof, to this end has to satisfy:

$$\frac{\mu2}{\mu1} \cdot \sin(\alpha) \cdot Sf > 1 \qquad (4).$$

If the coefficients of friction $\mu1$, $\mu2$ differ only slightly from one another, the equation (4) can be simplified as follows:

$$Sf > \frac{1}{\sin(\alpha)} \qquad (5).$$

Preferably, in this case, the transverse elements 13 are made of plastic and both the pulley sheaves 15 and the pulling elements 14 are made of metal.

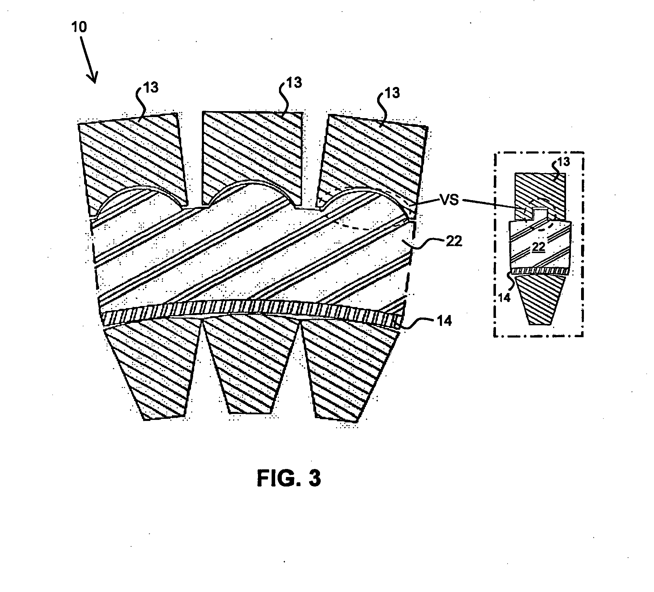

In practice, a safety factor Sf determined in accordance with equation (5) will be relatively large compared to the commonly used values up to approximately 2.0 and preferably approximately 1.3, namely in the range from 2.5 to 5, at least in the case of the typically used contact angles $\alpha$. However, such a large safety factor is usually to the detriment of the efficiency of the transmission, so that it may be preferred, at least with a relatively low speed of revolution of the drive belt 10, to achieve the intended pull belt functionality thereof in a different manner. According to the invention, the latter can be realized by profiling the radially outer side of the pulling element 14, or at least providing it with a profiled cover layer 22. The radially inner side of the pulling element 14 on which said radial forces Fr1 and Fc and/or the respective normal force Fn2 act in this case is designed to be substantially flat. All this is either in addition or alternatively to the above. An example of such a drive belt 10 is illustrated in Fig. 3 in a cross section viewed in the transverse direction of a section thereof.

The result of the drive belt 10 from Fig. 3 is that it will act as a pull belt under all circumstances, i.e. for example also at an extremely low speed of revolution v thereof. An important advantage of the drive belt 10 from Fig. 3 is the fact that said profiling, and/or positive lock VS achieved thereby in the peripheral direction between the pulling element 14 and the transverse elements 13, is subjected to greatly reduced loads compared to the known drive belt designs, due to the fact that, under certain operating conditions, said torque T is still transmitted by the pulling elements 14, as is described above. According to the invention, some clearance can advantageously be allowed between the profiling of the pulling element 14, and/or of the cover layer 22 thereof and the individual transverse elements 13 of the drive belt 10, preferably both in the radial direction and in the peripheral direction.

In the first variant of said positive lock VS, shown in the main figure of Fig. 3, the pulling element 14 will be pushed at least slightly (radially) inwards by the interaction with the transverse elements 13 during operation. As a result thereof, the intended friction coupling between the radially inner side of the pulling element 14 and the transverse elements 13 is strengthened in an advantageous manner with an additional oriented force (in addition to Fn2 and ¼•Fc). However, in the boxed insert in Fig. 3, a second variant of said positive lock VS is illustrated which has a more angular/blocked design. During operation, this second variant will result in a smaller load on the pulling element 14 during operation, more particularly the cover layer 22 thereof, which may be preferred in some applications.

Although the present invention has been described and illustrated in the figures with reference to a drive belt 10 having two single pulling elements 14, the application thereof is by no means limited to the illustrated type of drive belt 10. In a corresponding manner, the invention can equally well be realized in and/or using a drive belt 10 having a single pulling element 14 accommodated in an opening provided centrally in the transverse elements 13 and/or a pulling element 14 or pulling elements 14 composed of a number of individual and stacked strip-shaped rings.

## Claims

1. Drive belt (10) comprising a continuous pulling element (14) made of steel and having a substantially elongate cross section and having a series of individual transverse elements (13), which are at least partly made of plastic and which are in sliding contact with the pulling element (14), **characterized in that** a coefficient of friction acting in the sliding contact between a transverse element (13) and the pulling element (14) has a value in the range between 0.3 and 0.6.

2. Drive belt (10) according to Claim 1, **characterized in that**, at least in the sliding contact between a transverse element (13) and a pulling element (14), one of the two drive belt components (13; 14) is provided with a coating or a rubber cover layer.

3. Drive belt (10) according to Claim 1 or 2, **characterized in that** the radially inner side of the pulling element (14) is of substantially flat design and **in that** the radially outer side of the pulling element (14) is provided with a profiling which engages with the transverse elements (13), whereby the transverse elements (13) are fixedly connected to the pulling element (14) in the peripheral direction of the drive belt.

**4.** Drive belt (10) according to Claim 3, **characterized in that** the radially inner side of the pulling element (14) is formed by a pulling strip and in which the radially outer side of the pulling element (14) is formed by a cover layer (22) which is applied to the pulling strip, is provided with said profiling and is preferably at least adhesively bonded to the pulling element (14).

**5.** Drive belt (10) according to Claim 4, **characterized in that** said cover layer (22) is made of plastic or rubber.

**6.** Drive belt (10) according to at least one of the preceding claims, **characterized in that** the transverse elements (13) are at least partly made of a polyamide preferably reinforced with glass, carbon or aramide fibres.

**7.** Drive belt (10) according to Claim 6, the transverse elements (13) of which are provided with two side faces (21) which are positioned at an acute angle to one another and which extend on either side of the transverse element (13) between the principal planes (20) thereof, **characterized in that** the transverse elements (13) are made of at least two materials of different densities, with the lighter material forming at least the side faces (21) and preferably also the principal planes (20) and a contact surface of the transverse element (13) with the pulling element (14).

**8.** Continuously variable transmission comprising two pulleys (11, 12) comprising in each case two pulley sheaves (15) and a drive belt (10) according to at least one of Claims 1-7, which drive belt (10) drive-connects the pulleys (11, 12) to one another, **characterized in that** the pulley sheaves (15) are made of steel.

**9.** Continuously variable transmission comprising two pulleys (11, 12) having in each case two pulley sheaves (15) and a drive belt (10) according to at least one of Claims 1-7, which drive belt (10) drive-connects the pulleys (11, 12) to one another, in particular according to Claim 8, **characterized in that** in the transmission no, at least no active, oil lubrication and/or oil cooling of the drive belt (10) and the pulley sheaves (15) is used.

**10.** Motor vehicle having a motor, at least one driven wheel and a continuously variable transmission according to Claim 8 or 9, **characterized in that** the motor vehicle is provided with two wheels and two wheels only.

**11.** Motor vehicle having a motor, at least one driven wheel and a continuously variable transmission according to Claim 8 or 9, in particular according to Claim 10, **characterized in that** the motor can generate a power of at most 50 kW.


**Patentansprüche**

**1.** Antriebsriemen (10), der ein Endloszugelement (14) umfasst, das aus Stahl hergestellt ist und einen im Wesentlichen länglichen Querschnitt aufweist, und eine Anzahl einzelner Querelemente (13) aufweist, die zumindest teilweise aus Kunststoff hergestellt sind und die in Gleitkontakt mit dem Zugelement (14) stehen, **dadurch gekennzeichnet, dass** ein am Gleitkontakt zwischen einem Querelement (13) und dem Zugelement (14) wirkender Reibkoeffizient einen Wert im Bereich zwischen 0,3 und 0,6 aufweist.

**2.** Antriebsriemen (10) nach Anspruch 1, **dadurch gekennzeichnet, dass** zumindest am Gleitkontakt zwischen einem Querelement (13) und einem Zugelement (14) eine der beiden Antriebsriemenkomponenten (13; 14) mit einer Beschichtung oder einer Gummiabdeckschicht versehen ist.

**3.** Antriebsriemen (10) nach Anspruch 1 oder 2, **dadurch gekennzeichnet, dass** die radial innen liegende Seite des Zugelements (14) im Wesentlichen flach ist und dass die radial außen liegende Seite des Zugelements (14) mit einer Profilierung versehen ist, die sich mit den Querelementen (13) in Eingriff befindet, wobei die Querelemente (13) mit dem Zugelement (14) in der Umfangsrichtung des Antriebsriemens fest verbunden sind.

**4.** Antriebsriemen (10) nach Anspruch 3, **dadurch gekennzeichnet, dass** die radial innen liegende Seite des Zugelements (14) durch einen Zugstreifen gebildet wird und wobei die radial außen liegende Seite des Zugelements (14) durch eine Abdeckschicht (22) gebildet wird, die an den Zugstreifen angelegt wird, mit der Profilierung versehen ist und vorzugsweise zumindest mit dem Zugelement (14) durch einen Klebstoff verbunden ist.

**5.** Antriebsriemen (10) nach Anspruch 4, **dadurch gekennzeichnet, dass** die Deckschicht (22) aus Kunststoff oder Gummi hergestellt ist.

**6.** Antriebsriemen (10) nach mindestens einem der vorhergehenden Ansprüche, **dadurch gekennzeichnet, dass** die Querelemente (13) zumindest teilweise aus einem vorzugsweise durch Glas-, Kohlenstoff- oder Aramidfasern verstärkten Polyamid hergestellt sind.

7. Antriebsriemen (10) nach Anspruch 6, dessen Querelemente (13) mit zwei Seitenflächen (21) versehen sind, die in einem spitzen Winkel zueinander positioniert sind und die sich auf beiden Seiten des Querelements (13) zwischen den Hauptebenen (20) davon erstrecken, **dadurch gekennzeichnet, dass** die Querelemente (13) aus mindestens zwei Materialien mit unterschiedlicher Dichte hergestellt sind, wobei das leichtere Material mindestens die Seitenflächen (21) und vorzugsweise auch die Hauptebenen (20) und eine Kontaktfläche des Querelements (13) mit dem Zugelement (14) bildet.

8. Stufengetriebe, das zwei jeweils zwei Rollenscheiben (15) umfassende Rollen (11, 12) und einen Antriebsriemen (10) nach mindestens einem der Ansprüche 1-7 umfasst, wobei der Antriebsriemen (10) die Rollen (11, 12) miteinander antriebsverbindet, **dadurch gekennzeichnet, dass** die Rollenscheiben (15) aus Stahl hergestellt sind.

9. Stufengetriebe, das zwei jeweils zwei Rollenscheiben (15) aufweisende Rollen (11, 12) und einen Antriebsriemen (10) nach mindestens einem der Ansprüche 1-7 umfasst, wobei der Antriebsriemen (10) die Rollen (11, 12) miteinander antriebsverbindet, insbesondere nach Anspruch 8, **dadurch gekennzeichnet, dass** in dem Getriebe keine, zumindest keine aktive, Ölschmierung und/oder Ölkühlung des Antriebsriemens (10) und der Rollenscheiben (15) verwendet wird.

10. Kraftfahrzeug mit einem Motor, mindestens einem angetriebenen Rad und einem Stufengetriebe nach Anspruch 8 oder 9, **dadurch gekennzeichnet, dass** das Kraftfahrzeug mit zwei Rädern und nur zwei Rädern ausgestattet ist.

11. Kraftfahrzeug mit einem Motor, mindestens einem angetriebenen Rad und einem Stufengetriebe nach Anspruch 8 oder 9, insbesondere nach Anspruch 10, **dadurch gekennzeichnet, dass** der Motor eine Leistung von höchstens 50 kW erzeugen kann.

## Revendications

1. Courroie d'entraînement (10) comprenant un élément de traction continue (14) fabriqué en acier et ayant une section transversale substantiellement allongée et ayant une série d'éléments transversaux individuels (13) qui sont au moins en partie fabriqués en plastique et qui sont en contact coulissant avec l'élément de traction (14), **caractérisée en ce qu'**un coefficient de frottement agissant dans le contact coulissant entre un élément transversal (13) et l'élément de traction (14) a une valeur comprise entre 0,3 et 0, 6.

2. Courroie d'entraînement (10) selon la revendication 1, **caractérisée en ce que**, au moins dans le contact coulissant entre un élément transversal (13) et un élément de traction (14), l'un des deux composants de la courroie d'entraînement (13 ; 14) est pourvu d'un revêtement ou d'une couche de recouvrement en caoutchouc.

3. Courroie d'entraînement (10) selon la revendication 1 ou 2, **caractérisée en ce que** le côté radialement interne de l'élément de traction (14) est de conception substantiellement plate et **en ce que** le côté radialement externe de l'élément de traction (14) est pourvu d'un profilage qui s'engage avec les éléments transversaux (13), les éléments transversaux (13) étant de ce fait connectés fixement à l'élément de traction (14) dans la direction périphérique de la courroie d'entraînement.

4. Courroie d'entraînement (10) selon la revendication 3, **caractérisée en ce que** le côté radialement interne de l'élément de traction (14) est formé par une bande de traction et dans laquelle le côté radialement externe de l'élément de traction (14) est formé par une couche de recouvrement (22) qui est appliquée sur la bande de traction, qui est pourvue dudit profilage et qui est de préférence au moins collée par adhésion à l'élément de traction (14).

5. Courroie d'entraînement (10) selon la revendication 4, **caractérisée en ce que** ladite couche de recouvrement (22) est fabriquée en plastique ou en caoutchouc.

6. Courroie d'entraînement (10) selon au moins l'une quelconque des revendications précédentes, **caractérisée en ce que** les éléments transversaux (13) sont au moins en partie fabriqués en un polyamide de préférence renforcé par des fibres de verre, de carbone ou d'aramide.

**7.** Courroie d'entraînement (10) selon la revendication 6, dont les éléments transversaux (13) sont pourvus de deux faces latérales (21) qui sont positionnées suivant un angle aigu l'une par rapport à l'autre et qui s'étendent de chaque côté de l'élément transversal (13) entre les plans principaux (20) de celui-ci, **caractérisée en ce que** les éléments transversaux (13) sont fabriqués en au moins deux matériaux de densités différentes, le matériau plus léger formant au moins les faces latérales (21) et de préférence aussi les plans principaux (20) et une surface de contact de l'élément transversal (13) avec l'élément de traction (14).

**8.** Transmission à variation continue comprenant deux poulies (11, 12) comprenant, dans chaque cas, deux réas de poulies (15) et une courroie d'entraînement (10) selon au moins l'une quelconque des revendications 1 7, laquelle courroie d'entraînement (10) relie par transmission les poulies (11, 12) l'une à l'autre, **caractérisée en ce que** les réas de poulies (15) sont fabriqués en acier.

**9.** Transmission à variation continue comprenant deux poulies (11, 12) comprenant, dans chaque cas, deux réas de poulies (15) et une courroie d'entraînement (10) selon au moins l'une quelconque des revendications 1 à 7, laquelle courroie d'entraînement (10) relie par transmission les poulies (11, 12) l'une à l'autre, en particulier selon la revendication 8, **caractérisée en ce qu'**il n'est utilisé dans la transmission aucune huile de lubrification, au moins aucune huile active de lubrification, et/ou aucun refroidissement à huile de la courroie d'entraînement (10) et des réas de poulies (15).

**10.** Véhicule à moteur comprenant un moteur, au moins une roue menée et une transmission à variation continue selon la revendication 8 ou 9, **caractérisé en ce que** le véhicule à moteur est pourvu de deux roues et de deux roues uniquement.

**11.** Véhicule à moteur comprenant un moteur, au moins une roue menée et une transmission à variation continue selon la revendication 8 ou 9, en particulier selon la revendication 10, **caractérisé en ce que** le moteur peut générer une puissance maximale de 50 kW.

**FIG. 1**

**FIG. 2**

**FIG. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4612005 A
- GB 2088018 A
- GB 196465 A
- EP 1304501 A
- US 6102823 A